(19) Europäisches Patentamt
European Patent Office
Office européen des brevets

(11) **EP 1 721 132 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(21) Anmeldenummer: **05716871.8**

(22) Anmeldetag: **02.03.2005**

(51) Int Cl.:
*G01F 23/296* (2006.01)   *G01F 23/28* (2006.01)

(86) Internationale Anmeldenummer:
**PCT/EP2005/050906**

(87) Internationale Veröffentlichungsnummer:
**WO 2005/085770 (15.09.2005 Gazette 2005/37)**

(54) **VORRICHTUNG ZUR BESTIMMUNG UND/ODER ÜBERWACHUNG EINER PROZESSGRÖSSE**

DEVICE FOR DETERMINING AND/OR MONITORING A PROCESS VARIABLE

DISPOSITIF POUR DETERMINER ET/OU SURVEILLER UNE VARIABLE DE PROCESSUS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **05.03.2004 DE 102004011377**

(43) Veröffentlichungstag der Anmeldung:
**15.11.2006 Patentblatt 2006/46**

(73) Patentinhaber: **Endress u. Hauser GmbH u.Co. KG**
**79689 Maulburg (DE)**

(72) Erfinder:
• **LOPATIN, Sergej**
**79540 Lörrach (DE)**
• **PFEIFFER, Helmut**
**79585 Steinen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**FR-A- 1 408 436**     **US-A- 3 170 094**
**US-A- 3 385 104**     **US-A- 4 740 726**
**US-A1- 2002 101 253**

## Beschreibung

Die Erfindung bezieht sich auf eine Vorrichtung zur Bestimmung und/oder Überwachung mindestens einer physikalischen oder chemischen Prozessgröße eines Mediums, mit mindestens einer schwingfähigen Einheit, die mechanische Schwingungen erzeugt und/oder empfängt. Bei der Prozessgröße kann es sich beispielsweise um den Füllstand, die Dichte oder die Viskosität eines Mediums in einem Behälter oder um den Volumen- oder Massendurchfluss eines durch ein Rohr strömenden Fluids handeln. Die Schwingungen können entweder kontinuierlich erzeugt werden oder es handelt sich um Schwingungspakete, sog. Bursts.

Unter einer schwingfähigen Einheit soll eine Einheit verstanden werden, die mechanische Schwingungen erzeugt und/oder empfängt, wobei die Schwingungen von bestimmten, durch die Einheit selbst vorgegebenen Größen abhängt. Solche schwingfähigen Einheiten sind beispielsweise als Schwingstäbe oder Schwinggabeln zur Füllstandsgrenzstanddetektion oder als Schwingmembran eines Ultraschallwandlers oder als Messrohr eines in den Verlauf einer Rohrleitung eingesetzten Messaufnehmers vom Vibrationstyp bekannt. Messaufnehmer vom Vibrationstyp werden beispielsweise dazu verwandt, den Massendurchfluss, eine Dichte und/oder eine Viskosität eines in einer Rohrleitung strömenden Fluids zu messen. Bei solchen schwingfähigen Einheiten hängt z.B. die Frequenz bzw. die Wellenlänge von der Massenträgheit und der Steifigkeit ab, wenn es sich um einen Schwingstab handelt, oder sie hängt ab von der in der Einheit vorgegebenen und ebenfalls durch die Steifigkeit beeinflussten Schallgeschwindigkeit, wenn es sich um einen Ultraschallwandler handelt. Ein Problem solcher schwingfähiger Einheiten besteht darin, dass sie auf bestimmte Frequenzen bzw. Wellenlängen abgestimmt werden müssen, um bei entsprechenden Medien anwendbar zu sein oder um bestimmte vorteilhafte Frequenzbereiche auszunutzen. Weiterhin sind auch meist die entsprechenden Auswerteeinheiten in Bezug auf die verwendete Elektronik auf spezielle Frequenzbereiche fixiert. Dem zuwider läuft die Tatsache, dass die in der Anwendung herrschenden Prozessbedingungen Auswirkungen auf die eingestellte Resonanzfrequenz haben, sie also auch beeinflussen oder verändern können. Bei sog. Einstäben - und auch allgemein sonst bei Sensoren, die in direkten Kontakt mit dem zu messenden Medium kommen - kann sich z.B. Ansatz durch das Material bilden oder es kann Korrosion entstehen. Beides verändert die Masse und somit auch die Resonanzfrequenz des Einstabs. Bei Ultraschallsensoren ändern sich die Resonanzeigenschaften z.B. durch die Prozesstemperatur. Somit gibt es Prozessbedingungen, die den Abgleich oder die Abstimmung auf die gewünschte Frequenz wieder zunichte machen.

Daher ist es die Aufgabe der Erfindung, es zu ermöglichen, dass mindestens eine Schwingungseigenschaft einer Vorrichtung zur Bestimmung und/oder Überwachung einer Prozessgröße variabel einstellbar bzw. anpassbar ist.

Die Aufgabe wird bezüglich der Vorrichtung dadurch gelöst, dass mindestens eine Einstelleinheit vorgesehen ist, deren Steifigkeit veränderbar ist, und die derartig ausgestaltet und derartig mit der schwingfähigen Einheit verbunden oder derartig ein Bestandteil der schwingfähigen Einheit ist, dass mindestens die Resonanzfrequenz der schwingfähigen Einheit über die Einstelleinheit veränderbar ist. Der Grundgedanke der Erfindung besteht darin, über die Steifigkeit der Einstelleinheit und somit - je nach der Verbindung mit der schwingfähigen Einheit - über die Steifigkeit der schwingfähigen Einheit die Resonanzfrequenz passend einzustellen und ggf. in der Anwendung, d.h. im Prozess auch nachzufahren. Somit ist zum einen ein Abgleich möglich, der z.B. aus Fertigungsgründen nötig ist und somit eine größere Toleranz der Bauteile erlaubt. Dies ist bei der Herstellung relevant. Zum anderen kann auch ein Abgleich oder eine Anpassung während der Anwendung vollzogen werden, der durch die herrschenden Prozessbedingungen erforderlich wird. Somit lässt sich auch im Feld unter widrigen Bedingungen die optimale Empfindlichkeit wieder einstellen. Weiterhin kann durch gezielte Änderung der Resonanzfrequenz ein *predictive maintenance* ermöglicht werden. Die Einstelleinheit kann dabei ein Bestandteil der schwingfähigen Einheit sein oder die schwingfähige Einheit und die Einstelleinheit können auch identisch sein, so dass eine Einheit beide Funktionen übernimmt. Die Ausgestaltung der Einstelleinheit richtet sich dabei nach der Art der Anwendung und der Ausgestaltung der schwingfähigen Einheit.

Eine Ausgestaltung sieht vor, dass die Einstelleinheit aus einem piezo-elektrischen Material besteht, das mit Elektroden verbunden ist, und dessen Steifigkeit mindestens durch einen elektrischen Strom zwischen den Elektroden veränderbar ist. Die Steifigkeit von piezo-elektrischen Elementen lässt sich verändern, indem Elektroden angeschlossen werden, die entweder frei sind - es kann also kein Strom zwischen ihnen fließen - oder die kurzgeschlossen sind - zwischen den Elektroden fließt also ein Strom -. Im kurzgeschlossenen Zustand ist die Steifigkeit des Elements üblicherweise am geringsten. Durch einen graduellen Übergang zwischen diesen beiden Zuständen lässt sich die Steifigkeit graduell ändern. In Bezug auf die relative Steifigkeit eines piezo-elektrischen Elements lassen sich Unterschiede bis zu 25% erzielen. In Abhängigkeit davon, welchen Anteil das piezo-elektrische Element an der Steifigkeit der schwingfähigen Einheit insgesamt bildet, lässt sich somit in entsprechenden Bereichen die gesamte Steifigkeit und somit die Resonanzfrequenz ändern und einstellen. Die Anzahl der piezo-elektrischen Elemente ist dementsprechend zu wählen, um den gewünschten Einstellbereich für die Resonanzfrequenz zu erhalten.

Die Schwingfrequenz f z.B. eines Schwingstabes errechnet sich über seine Drehsteifigkeit im Punkt seiner Befestigung C und über sein Massenträgheitsmoment θ durch die **Formel:** $f = \sqrt{\dfrac{C}{\theta}}$. Somit führt eine

Änderung der Steifigkeit C zu einer Änderung der Schwingfrequenz f. Ist daher die Einstelleinheit ein Bestandteil der schwingfähigen Einheit oder ist sie passend mit ihr verbunden, so lässt sich damit einfach und vor allem elektrisch die Resonanzfrequenz einstellen.

Eine Ausgestaltung beinhaltet, dass die Einstelleinheit aus einem magnetostriktiven Material besteht, dessen Steifigkeit mindestens durch ein anliegendes Magnetfeld veränderbar ist. Handelt es sich bei der Einstelleinheit um ein magnetostriktives Element, so kommt es durch das Anlegen eines Magnetfeldes - vorzugsweise eines Gleichstrommagnetfelds - an dieses Element zu einer mechanischen Spannung, was zu einer Änderung der Steifigkeit der Einstelleinheit führt. Magnetostriktive Materialien sind verformbar, indem ein magnetisches Feld angelegt wird. Umgekehrt erzeugen sie ein magnetisches Feld, wenn ein mechanischer Druck auf sie ausgeübt wird. Klassische Eisen-seltene Erden-Verbindungen zeigen eine höhere Leistungsdichte als piezoelektrische Elemente/Keramiken. Daher bringen sie viele Vorteile in einer Reihe von Anwendungen.

Eine vorteilhafte Ausgestaltung beinhaltet, dass eine Steuereinheit vorgesehen ist, die die Einstelleinheit elektrisch steuert. Eine solche Steuereinheit wertet z.B. die Schwingungen der schwingfähigen Einheit aus und stellt passend die Resonanzfrequenz ein. Dies lässt sich z.B. über Mikroprozessoren realisieren. Der Vorteil ist, dass somit in der praktischen Anwendung automatisch eine Optimierung der Messbedingungen durchgeführt werden kann. Die Steuereinheit kann jedoch z.B. auch von einem Benutzer bedient werden. Im einfachsten Fall handelt es sich bei der Steuereinheit um einen regelbaren Widerstand, über den die elektrischen Grenzbedingungen der Einstelleinheit - wie z. B. der Strom zwischen den Elektroden - geändert wird.

Eine vorteilhafte Ausgestaltung sieht vor, dass die Steuereinheit derartig ausgestaltet ist, dass sie in Abhängigkeit von der Schwingungsamplitude und/oder der Schwingungsfrequenz der von der schwingfähigen Einheit erzeugten und/oder empfangenen mechanischen Schwingungen die Resonanzfrequenz der schwingfähigen Einheit einstellt. Eine solche Steuereinheit kann z.B. ein Teil der Fertigungseinheit sein, so dass in Abhängigkeit von der Amplitude und/oder der Frequenz die Steifigkeit so verändert wird, dass ein vorbestimmter Wert oder z.B. die maximale Amplitude erreicht wird. Eine solche Steuereinheit setzt beispielsweise einen regelbaren Widerstand auf einen entsprechenden Wert. Dies ist die Anwendung der Erfindung im Bereich der Fertigung, um auf Fertigungstoleranzen der Bauteile reagieren zu können. Die Steuereinheit kann auch ein Teil der Regel-/Auswerteinheit sein, die meist ein Bestandteil der Vorrichtung ist, und die dort die Schwingungen zur Bestimmung und/oder Überwachung der Prozessgröße passend auswertet und auch regelt. Somit lässt sich die Resonanzfrequenz während der praktischen Anwendung der Vorrichtung nachfahren, wenn dies aufgrund von Prozessbedingungen nötig ist. Bei einer solchen aktiven Anpassung muss jedoch darauf geachtet werden, dass nicht eine Änderung der zu überwachenden oder zu bestimmenden Prozessgröße kompensiert wird. Entsprechende Ausgestaltungen hängen dabei jeweils von der konkreten Ausgestaltung der schwingfähigen Einheit und auch von der Art der Verwendung der Vorrichtung ab.

Die zunächst folgenden Ausgestaltungen befassen sich mit einem sog. Einstab als schwingfähiger Einheit einer Vorrichtung.

Eine Ausgestaltung sieht vor, dass in der schwingfähigen Einheit mindestens ein innerer Schwingstab und ein äußerer Schwingstab vorgesehen sind, dass der äußere Schwingstab den inneren Schwingstab koaxial umgibt, dass der äußere und der innere Schwingstab miteinander gekoppelt sind, und dass mindestens eine Einstelleinheit mindestens mit einem der Schwingstäbe gekoppelt ist. Vorzugsweise ist die Einstelleinheit mit mindestens einem der Schwingstäbe mechanisch gekoppelt oder sie ist mit mindestens einem der Schwingstäbe verbunden. Bei der schwingfähigen Einheit handelt es sich in dieser Ausgestaltung um einen Einstab. Siehe dazu die Anmeldung beim Deutschen Patent- und Markenamt mit dem Aktenzeichen 103 18 705. Ein Einstab dient beispielsweise der Füllstandsdetektion, bei welcher Änderungen der Schwingungsamplitude oder der -frequenz dahingehend interpretiert werden, dass ein durch die Einbauhöhe vorgegebener Füllstand unterschritten wird - es wird also der Übergang von der bedeckten zur freien Schwingung festgestellt - oder dass ein solcher Füllstand überschritten wird - es wird also ausgewertet, wie Amplitude und Frequenz auf den Übergang von "Bedeckt" zu "Frei" reagieren -. Bei einem solchen Einstab müssen der innere und der äußere Schwingstab aufeinander abgestimmt sein, so dass keine Reaktionskräfte und -momente am Einspannbereich der schwingfähigen Einheit auftreten, so dass also keine Schwingungsenergie verloren geht. Ein solcher Abgleich, der z.B. gleiche Resonanzfrequenz der Schwingstäbe bedeutet, kann durch Ansatz am äußeren Schwingstab oder durch Korrosion aufgehoben werden. Dies kann bis zum Totalausfall führen. Um dies zu vermeiden, kann die erfindungsgemäße Einstelleinheit einen Abgleich erzeugen. Somit kann also auf Ansatz oder Korrosion in einem durch die Ausgestaltung der Einstelleinheit bestimmten Bereich im Feld, d.h. in der Anwendung reagiert werden. Bei der schwingfähigen Einheit kann es sich des weiteren auch um eine sog. Schwinggabel handeln, wie sie von der Anmelderin unter der Bezeichnung "Liquiphant" hergestellt und vertrieben wird. Dabei ist dann zumindest ein Zinken dieser Gabel mit einer Einstelleinheit zu koppeln.

Eine vorteilhafte Ausgestaltung beinhaltet, dass die Einstelleinheit mindestens mit dem inneren Schwingstab verbunden ist. Somit befindet sich die Einstelleinheit geschützt im Innenraum der Vorrichtung und kann dort optimal ihren korrigierenden Dienst versehen.

Eine Ausgestaltung sieht vor, dass die Steuereinheit derartig ausgestaltet ist, dass sie in Abhängigkeit von der Schwingungsamplitude die Einstelleinheit zur Erzielung einer maximalen Amplitude steuert. Dies ist besonders für Einstäbe relevant, bei denen die Amplitude zur Bestimmung und/oder Überwachung von Prozessgrößen verwendet wird. Somit wird der physikalische Effekt, der zur Anwendung ausgenutzt wird, maximiert.

Die folgenden Ausgestaltungen beziehen sich auf einen Ultraschallwandler oder Ultraschallsensor in einer entsprechenden Vorrichtung. Ähnliche Wandler und Sensoren mit anderen Frequenzbereichen sind jedoch ebenfalls für die Umsetzung der Erfindung geeignet.

Eine Ausgestaltung beinhaltet, dass in der schwingfähigen Einheit mindestens ein Sende/Empfangspiezo vorgesehen ist, dass die Einstelleinheit Bestandteil der schwingfähigen Einheit ist, und dass die Resonanzfrequenz der schwingfähigen Einheit im Ultraschallbereich liegt. Liegen die Frequenzen im Ultraschallbereich, so handelt es sich bei der schwingfähigen Einheit um einen Ultraschallwandler. Ein solcher Wandler kann kontinuierlich betrieben werden oder sog. Bursts, also Wellenpakete, erzeugen. In der einfachsten Bauweise handelt es sich um einen Sende/Empfangspiezo, der ggf. alternierend sendet und empfängt. Sind mehrere piezo-elektrische Elemente in der schwingfähigen Einheit vorgesehen, so kann es sich bei einem dieser Elemente auch um die Einstelleinheit selbst handeln.

Eine Ausgestaltung für den Bereich der Ultraschallschwingungen beinhaltet, dass in der schwingfähigen Einheit mindestens eine vorderseitige und eine rückseitige Masse vorgesehen sind, dass mindestens ein Sende/Empfangspiezo zwischen den beiden Massen vorgesehen ist, dass mindestens eine Einstelleinheit Bestandteil einer der beiden Massen ist, und dass die Resonanzfrequenz der schwingfähigen Einheit im Ultraschallbereich liegt. Bei der schwingfähigen Einheit handelt es sich in dieser zweiten Ausgestaltung also um einen Ultraschallwandler oder Ultraschallsensor nach dem Langevin-Typ. Die Resonanzfrequenz ist dabei üblicherweise umgekehrt proportional zur Länge der gesamten Einheit aus den beiden Massen und dem Sende/Empfangspiezo, da die halbe Wellenlänge dieser Länge entspricht. Diese Bedingung lässt sich jedoch dadurch ändern, dass die Schallgeschwindigkeit in mindestens einer der beiden Massen geändert wird. Und hiermit ergibt sich auch der große Vorteil der Erfindung. Ist mindestens eine Einstelleinheit Bestandteil mindestens einer Masse, so kann durch die

Änderung der Steifigkeit auch die Schallgeschwindigkeit in dieser Masse geändert werden. Somit ist eine viel leichtere Anpassung der Resonanzfrequenz möglich als z.B. durch das Kürzen oder Verlängern der Massen. Diese Einstelleinheit wird daher also besonders relevant, um auf Fertigungstoleranzen reagieren zu können. Weiterhin kann somit der Sensor auch auf einen gewünschten Frequenzbereich eingestellt werden, ohne einen sonst üblichen Dämpfer verwenden zu müssen, der meist zu einer Reduktion der Leistung führt, da er den Sensor breitbandig macht. Es ist also möglich, dass der Ultraschallwandler mit voller Leistung mit mehreren Resonanzfrequenzen einsetzbar ist. Die Erfindung ist aber auch in diesem Bereich nicht auf die Anwendung im Ultraschallbereich beschränkt.

Eine vorteilhafte Ausgestaltung sieht vor, dass in der schwingfähigen Einheit mindestens eine Anpassungsschicht zur Ankopplung an das Medium vorgesehen ist. Um maximale Effektivität in bestimmten Medien (z.B. Wasser) zu gewährleisten, wird oft eine λ/4-Anpassungsschicht verwendet. Solche Anpassungsschichten haben jedoch üblicherweise eine andere Temperaturabhängigkeit der Schallgeschwindigkeit als der Piezoresonator. Daher geht bei bestimmten Temperaturen die Leistung zurück. Mit der erfindungsgemäßen Einstelleinheit ist es möglich, eine Anpassung der Resonanzfrequenz an die λ/4-Anpassungschicht über einen weiten Temperaturbereich hin vorzunehmen. Die Resonanzfrequenz kann also über die erfindungsgemäße Einstelleinheit bei Temperaturänderungen an die Anpassungsschicht angepasst werden.

Eine vorteilhafte Ausgestaltung beinhaltet, dass in der schwingfähigen Einheit mindestens ein Bolzen vorgesehen ist, der eine Vorspannung erzeugt. Die Verbindung zwischen den beiden Massen und dem Sende/Empfangspiezo kann über Klebstoffe oder über einen Bolzen stattfinden. Die Leistung des Ultraschallsensors hängt von der mechanischen Vorspannung zwischen den Teilen ab. Diese Vorspannung wird über den Bolzen definiert. Wird der Bolzen gelockert, so reduzieren sich die Vorspannung und auch die Leistung. Im Sinne des *predictive maintenance* stellt sich die Frage, wie sich diese Vorspannung überprüfen lässt, ohne die Einheit auseinander schrauben zu müssen. Eine solche Möglichkeit erlaubt es, rechtzeitig den Verlust der Vorspannung zu erkennen, ohne dabei die Messvorrichtung aus dem eingebauten Zustand herauszunehmen. Durch die Erfindung wird also eine direkte Überprüfung im Feld möglich. Wenn der Ultraschallsensor aus verschiedenen Bauteile mit unterschiedlicher Steifigkeit besteht, so ist üblicherweise die kleinste auftretende Steifigkeit dominant. Mit der erfindungsgemäßen Einstelleinheit lässt sich jedoch die Steifigkeit ohne Änderung der Vorspannung variieren. Durch diese Änderung ergibt sich ein bestimmter Einfluss auf die Resonanzfrequenz des Gebildes, falls der Sensor an sich nicht zu sehr von der Steifigkeit der Einstelleinheit abweicht. Ist die mechanische Vorspannung vermindert, so ist jedoch auch die Frequenzänderung durch die Änderung der Steifigkeit vermindert, weil die gesamte Steifigkeit stärker durch den gelockerten Bolzen definiert wird. Somit kann durch eine Abweichung von der bekannten Frequenzänderung auf die Lockerung des Bolzens rückgeschlossen werden.

Eine Ausgestaltung der erfindungsgemäßen Vorrichtung sieht vor, dass die schwingfähige Einheit wenigstens ein Messrohr eines in den Verlauf einer Rohrleitung eingesetzten Messaufnehmers vom Vibrationstyp, insbesondere eines Coriolis-Massedurchfluss- oder eines Coriolismassedurchfluss/dichtemessers umfasst. Solche Messprinzipien lassen sich den Dokumenten US 5,796,011, US 6,651,513, US 6,006,609 oder US 5,531,126 entnehmen.

Die Aufgabe bezieht sich auch auf ein Verfahren zur Änderung der Resonanzfrequenz einer Vorrichtung zur Bestimmung und/oder Überwachung mindestens einer physikalischen oder chemischen Prozessgröße eines Mediums, mit mindestens einer schwingfähigen Einheit, die mechanische Schwingungen erzeugt und/oder empfängt. Unter dem Begriff: "Resonanzfrequenz einer Vorrichtung" ist dabei zu verstehen, dass es sich um die Resonanz- oder allgemein um die Schwingungsfrequenz handelt, mit welcher die (Mess-)Vorrichtung arbeitet, also die entsprechende Prozessgröße bestimmt und/oder misst.

Die Aufgabe wird bezüglich des Verfahrens erfindungsgemäß dadurch gelöst, dass die Steifigkeit mindestens einer Einstelleinheit, die mit der schwingfähigen Einheit verbunden oder ein Bestandteil der schwingfähigen Einheit ist, verändert wird. Handelt es sich bei der schwingfähigen Einheit um ein schwingfähiges System, dessen Resonanzfrequenz durch die Steifigkeit mindestens eines Bauteils bestimmt ist, so ermöglicht beispielsweise eine piezo-elektrische Einheit eine einfache und vor allem auch elektrisch steuerbare Einstellung der Resonanzfrequenz. Des Weiteren lassen sich die Ausgestaltungen für die obige erfindungsgemäße Vorrichtung auch bei dem Verfahren anwenden.

Die Erfindung wird anhand der nachfolgenden Zeichnungen näher erläutert. Es zeigt:

Fig. 1: eine Vorrichtung, deren Schwingstäbe im Schnitt dargestellt sind, und

Fig. 2: ein Ultraschallsensor, der eine erfindungsgemäße Einstelleinheit aufweist.

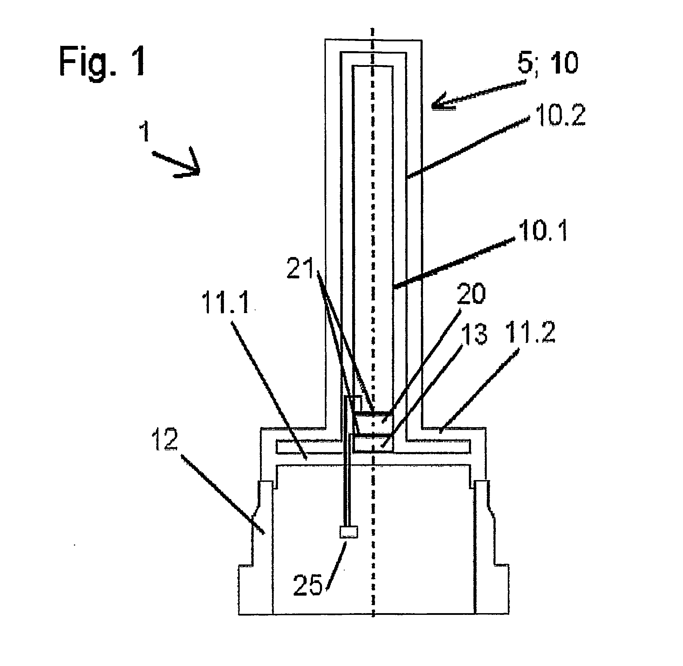

Fig. 1 zeigt eine Vorrichtung 1, bei der die schwingfähige Einheit 5 ein Einstab 10, bestehend aus einem inneren 10.1 und einem äußeren Schwingstab 10.2, ist. Dabei umgibt der äußere Schwingstab 10.2 den inneren 10.1 koaxial. Beide Schwingstäbe 10.1, 10.2 sind über eine erste Membran 11.1 elastisch miteinander gekoppelt. Der äußere Schwingstab 10.2 ist über eine zweite Membran 11.2 fest mit dem Prozessanschluss 12 verbunden. Über diesen Prozessanschluss wird die Vorrichtung 1 in einen Behälter (nicht dargestellt) eingebaut, um z.B. den Füllstand eines Mediums - hier besonders Schüttgut - in diesem Behälter zu überwachen. Über den Antriebs/Empfangspiezo 13 werden die Schwingstäbe 10.1, 10.2 zu gegenphasigen Schwingungen angeregt. Dazu ist es erforderlich, dass beide Schwingstäbe 10.1, 10.2 die gleiche Resonanzfrequenz aufweisen. Kommt der äußere Schwingstab 10.2 mit dem Schüttgut in Kontakt, ergibt sich eine Amplitudenänderung, da der Einstab 10 aufgrund von Reibungseffekten Energie verliert. Entsprechendes gilt, wenn der äußere Schwingstab 10.2 zunächst bedeckt und dann frei schwingt. Die Änderungen der Amplitude werden üblicherweise in entsprechende Meldungen umgesetzt.

Wichtig ist, dass dem Einstab 10 nicht dadurch Energie verloren geht, dass z.B. durch eine fehlerhafte Abstimmung der beiden Schwingstäbe 10.1, 10.2 Energie auf den Prozessanschluss 12, und somit auf den Behälter übertragen wird. Dies bedeutet, dass die Radialkraft im Schwerpunkt des inneren Schwingstabs 10.1 im Wesentlichen gleich der des äußeren Schwingstabs 10.2 sein muss und dass die Drehmomente an der Einspannung auch im Wesentlichen gleich zu sein haben. Die Kräfte und Momente sollen sich also aufgrund der gegenphasigen Schwingungen im Wesentlichen im Bereich des Prozessanschlusses gerade kompensieren. Daher ist eine Abstimmung der beiden Schwingstäbe 10.1, 10.2 aufeinander erforderlich.

Ist ein solches Schwingungssystem optimal abgeglichen, so kann es in der Praxis angewendet werden. Ein weiteres Problem besteht jedoch darin, dass sich am äußeren Schwingstab 10.2 durch den Kontakt mit dem Medium Ansatz bilden kann oder dass Korrosion stattfindet. Dadurch ändert sich die Masse des äußeren Schwingstabs 10.2 und somit ergibt sich auch ein anderes Massenträgheitsmoment und dadurch auch eine andere Schwingungsfrequenz und andere Schwingungsamplituden für den äußeren Schwingstab 10.2. Dadurch sind jedoch der innere 10.1 und äußere Schwingstab 10.2 nicht mehr aufeinander abgestimmt und es wird Schwingungsenergie auf den Prozessanschluss 12 übertragen. Daher wird hier bei Ansatz oder Korrosion die Einstelleinheit 20 bedeutend.

Die Einstelleinheit 20 besteht hier aus einem piezo-elektrischen Material, an dem zwei Elektroden 21 angeschlossen sind. Je nachdem, ob die Elektroden 21 frei oder kurzgeschlossen sind, d.h. ob ein Strom fließen kann oder nicht, ändert sich die Steifigkeit des piezo-elektrischen Elements 20. Zwischen einem kurzgeschlossenen und einem mit einer konstanten Spannung verbundenen piezo-elektrischen Element 20 erreicht man prozentuale Steifigkeitsänderungen, die im Bereich von bis zu 25% für dieses Element liegen. Gesteuert wird die Einstelleinheit 20 über eine Steuereinheit 25, deren entscheidendes Element in der einfachsten Ausgestaltung ein regelbarer Widerstand ist. Damit verbunden ist dann beispielsweise eine entsprechende Regelelektronik z.B. mit einer Mikroprozessorsteuerung (nicht dargestellt). Über den Widerstand der Steuereinheit 25 kann das piezo-elektrische Element 20 dann graduell kurzgeschlossen werden, wobei die Steifigkeit gleichzeitig abnimmt. Somit lässt sich die Steifigkeit des piezo-elektrischen Elements 20 und somit die des inneren Schwingstabs 10.1 graduell vermindern. Dadurch ändert sich die Resonanzfrequenz und es ist möglich, beide Schwingstäbe 10.1, 10.2 im Wesentlichen trotz des Ansatzes oder trotz der Korrosion wieder abzugleichen, so dass im Wesentlichen keine Kräfte oder Momente auf die Einspannung 12 wirken und dass somit der Einstab 10 wieder optimale Empfindlichkeit aufweist. Bei der Korrektur durch die Erfindung ist jedoch stets darauf zu achten, dass nicht Messeffekte kompensiert werden, ohne dass sie zur Bestimmung der Messgröße benutzt werden. Als schwingfähige Einheit ist auch eine sog. Schwinggabel möglich. Bei dieser stehen beide Zinken in Kontakt mit dem Medium.

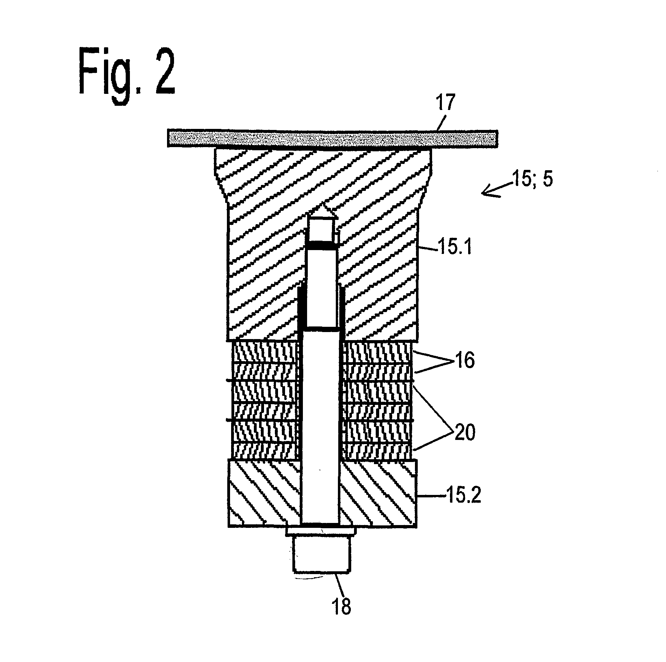

Fig. 2 zeigt einen Ultraschallwandler 15, der Teil einer Vorrichtung 1 zur Bestimmung und/oder Überwachung einer Prozessgröße, z.B. des Füllstandes ist. Über das Laufzeitverfahren kann mit einem solchen Ultraschallwandler 15 beispielsweise die Füllhöhe eines Mediums bestimmt werden, indem Wellen ausgesandt und detektiert und aus der Laufzeit der Abstand zur Reflexionsfläche bestimmt wird. Der Ultraschallwandler kann z.B. als elektroakustischer Wandler eines Füllstandsmessgeräts oder eines Ultraschall-Durchflussmessgeräts für ein in einer Rohrleitung strömendes Fluid dienen. Der Ultraschallwandler 15 besteht aus einer vorderseitigen 15.1 und einer rückseitigen Masse 15.2 und aus einem Sende/Empfangspiezo 16 zwischen diesen beiden Masse 15.1, 15.2. Ein Bolzen 18 sorgt für die entsprechende Vorspannung, über die sich die Leistung des Ultraschallwandlers 15 ergibt. Die Resonanzfrequenz des Ultraschallwandlers 15 ist umgekehrt proportional zu seiner Länge, insofern nicht unterschiedliche Schallgeschwindigkeiten in ihm gegeben sind. Auf der vorderseitigen Masse 15.1 befindet sich eine Anpassungsschicht 17, bei der es sich beispielsweise um eine $\lambda/4$-Schicht zur Kopplung an bestimmte Medien - z.B. Wasser - handelt. Die Einstelleinheit 20 ist hier ein Bestandteil der rückseitigen Masse 15.2 und kann somit dort über die Steifigkeitsänderung die Schallgeschwindigkeit in der rückseitigen Masse 15.2 und dadurch die Resonanzfrequenz der schwingfähigen Einheit 5 bzw. des Ultraschallwandlers 15 einstellen. Die Einstelleinheit 20 kann bei einem solchen Ultraschallwandler 15 als schwingfähiger Einheit 5 mehrere Aufgaben erfüllen: Zum einen kann somit auf Fertigungstoleranzen reagiert werden, indem die Resonanzfrequenz passend nachgefahren wird. Weiterhin kann somit ein Ultraschallwandler hergestellt werden, der auf unterschiedlichen Frequenzen arbeitet, ohne dass es durch einen Dämpfer zu Leistungsverlusten kommt. Diese Leistungsverlust ergibt sich daraus, dass der Dämpfer den Ultraschallwandler 15 breitbandig macht. Weiterhin kann auf durch Temperatureinfluss bedingte Resonanzänderungen in der Anpassungsschicht 17 reagiert werden. Das Temperaturverhalten einer solchen $\lambda/4$-Anpassungsschicht 17 unterschiedet sich üblicherweise von dem des Ultraschallwandlers 15. Dadurch kann es jedoch zu einer nicht mehr gegebenen Anpassung von Ultraschallwandler 15 und Anpassungsschicht 17 kommen, was üblicherweise mit Leistungsverlusten verbunden ist. Und überdies kann, indem die Steifigkeit bewusst geändert wird, die Vorspannung des Bolzens überprüft werden. Ist bei einer gegebenen Vorspannung die Frequenzänderung des Ultraschallwandlers 15 in Folge einer Änderung der Steifigkeit der Einstelleinheit 20 bekannt, so kann bei Abweichungen davon auf eine verminderte Vorspannung geschlossen werden.

## Patentansprüche

1. Vorrichtung (1) zur Bestimmung und/oder Überwachung mindestens einer physikalischen oder chemischen Prozessgröße eines Mediums, mit mindestens einer schwingfähigen Einheit (5), die mechanische Schwingungen erzeugt und/oder empfängt, **dadurch gekennzeichnet, dass** mindestens eine Einstelleinheit (20) vorgesehen ist, deren Steifigkeit veränderbar ist, und die derartig ausgestaltet und derartig mit der schwingfähigen Einheit (5) verbunden oder derartig ein Bestandteil der schwingfähigen Einheit (5) ist, dass mindestens die Resonanzfrequenz der schwingfähigen Einheit (5) über die Einstelleinheit (20) veränderbar ist.

2. Vorrichtung (1) nach Anspruch 1, **dadurch gekennzeichnet, dass** die Einstelleinheit (20) aus einem piezo-elektrischen Material besteht, das mit Elektroden (21) verbunden ist, und dessen Steifigkeit mindestens durch einen elektrischen Strom zwischen den Elektroden (21) veränderbar ist.

3. Vorrichtung (1) nach Anspruch 1, **dadurch gekennzeichnet, dass** die Einstelleinheit (20) aus einem magnetostriktiven Material besteht, dessen Steifigkeit mindestens durch ein anliegendes Magnetfeld veränderbar ist.

4. Vorrichtung (1) nach Anspruch 1, **dadurch gekennzeichnet, dass** eine Steuereinheit (25) vorgesehen ist, die die Einstelleinheit (20) elektrisch steuert.

5. Vorrichtung (1) nach Anspruch 4, **dadurch gekennzeichnet, dass** die Steuereinheit (25) derartig ausgestaltet ist, dass sie in Abhängigkeit von der Schwingungsamplitude und/oder der Schwingungsfrequenz der von der schwingfähigen Einheit (5) erzeugten und/oder empfangenen mechanischen Schwingungen die Resonanzfrequenz der schwingfähigen Einheit (5) einstellt.

6. Vorrichtung (1) nach einem oder mehreren der Ansprüche 1 bis 5, **dadurch gekennzeichnet, dass** in der schwingfähigen Einheit (5) mindestens ein innerer Schwingstab (10.1) und ein äußerer Schwingstab (10.2) vorgesehen sind, dass der äußere Schwingstab (10.2) den inneren Schwingstab (10.1) koaxial umgibt, dass der äußere (10.2) und der innere Schwingstab (10.1) miteinander gekoppelt sind, und dass mindestens eine Einstelleinheit (20) mindestens mit einem der Schwingstäbe (10.1, 10.2) gekoppelt ist.

7. Vorrichtung (1) nach Anspruch 6, **dadurch gekennzeichnet, dass** die Einstelleinheit (20) mindestens mit dem inneren Schwingstab (10.1) verbunden ist.

8. Vorrichtung (1) nach einem oder mehreren der Ansprüche 1 bis 5, **dadurch gekennzeichnet, dass** in der schwingfähigen Einheit (5) mindestens ein Sende/ Empfangspiezo (16) vorgesehen ist, dass die Einstelleinheit (20) Bestandteil der schwingfähigen Einheit (5) ist, und dass die Resonanzfrequenz der schwingfähigen Einheit (5) im Ultraschallbereich liegt.

9. Vorrichtung (1) nach einem oder mehreren der Ansprüche 1 bis 5, **dadurch gekennzeichnet, dass** in der schwingfähigen Einheit (5) mindestens eine vorderseitige (15.1) und eine rückseitige Masse (15.2) vorgesehen sind, dass mindestens ein Sende/ Empfangspiezo (16) zwischen den beiden Massen (15.1, 15.2) vorgesehen ist, dass mindestens eine Einstelleinheit (20) Bestandteil einer der beiden Massen (15.1, 15.2) ist, und dass die Resonanzfrequenz der schwingfähigen Einheit (5) im Ultraschallbereich liegt.

10. Vorrichtung (1) nach Anspruch 8 oder 9, **dadurch gekennzeichnet, dass** in der schwingfähigen Einheit (5) mindestens eine Anpassungsschicht (17) zur Ankopplung an das Medium vorgesehen ist.

11. Vorrichtung (1) nach Anspruch 9, **dadurch gekennzeichnet, dass** in der schwingfähigen Einheit (5) mindestens ein Bolzen (18) vorgesehen ist, der eine Vorspannung erzeugt.

12. Vorrichtung (1) nach einem oder mehreren der Ansprüche 1 bis 5, **dadurch gekennzeichnet, dass** die schwingfähige Einheit (5) wenigstens ein Messrohr eines in den Verlauf einer Rohrleitung eingesetzten Messaufnehmers vom Vibrationstyp, insbesondere eines Coriolis-Massedurchfluss- oder eines Coriolis-massedurchfluss/dichtemessers umfasst.

13. Verfahren zur Änderung der Resonanzfrequenz einer Vorrichtung (1) zur Bestimmung und/oder Überwachung mindestens einer physikalischen oder chemischen Prozessgröße eines Mediums, mit mindestens einer schwingfähigen Einheit (5), die mechanische Schwingungen erzeugt und/oder empfängt **dadurch gekennzeichnet, dass** die Steifigkeit mindestens einer Einstelleinheit (20), die mit der schwingfähigen Einheit (5) verbunden oder ein Bestandteil der schwingfähigen Einheit (5) ist, verändert wird.

## Claims

1. Device (1) for determining and/or monitoring at least one physical or chemical process variable of a medium with at least one unit (5) capable of oscillation, where said unit generates and/or receives mechanical oscillations, **characterized in that** at least one adjusting unit (20) - whose rigidity can be adjusted - is provided and where said adjusting unit is designed in such a way, and connected in such a way to the unit (5) capable of oscillation, or is an integral part of the unit (5) capable of oscillation in such a way that at least the resonating frequency of the unit (5) capable of oscillation can be adjusted via the adjusting unit (20).

2. Device (1) as per Claim 1, **characterized in that** the adjusting unit (20) consists of a piezo-electric material which is connected to electrodes (21) and whose rigidity can be adjusted at least by an electrical current between the electrodes (21).

3. Device (1) as per Claim 1, **characterized in that** the adjusting unit (20) is made from a magnetostrictive material whose rigidity can be adjusted at least by an adjacent magnetic field.

4. Device (1) as per Claim 1, **characterized in that** a control unit (25) is provided which controls the adjusting unit (20) electrically.

5. Device (1) as per Claim 4, **characterized in that** the control unit (25) is designed in such a way that it sets the resonating frequency of the unit (5) capable of oscillation depending on the oscillating amplitude and/or the oscillating frequency of the mechanical oscillations generated and/or received by the unit (5) capable of oscillation.

6. Device (1) as per one or more of the Claims 1-5, **characterized in that** at least one inner oscillating rod (10.1) and one outer oscillating rod (10.2) are provided in the unit (5) capable of oscillation, **in that** the outer oscillating rod (10.2) coaxially surrounds the inner oscillating rod (10.1), **in that** the outer (10.2) and inner oscillating rod (10.1) are coupled together and **in that** at least one adjusting unit (20) is at least coupled with one of the oscillating rods (10.1; 10.2).

7. Device (1) as per Claim 6, **characterized in that** the adjusting unit (20) is connected at least to the inner oscillating rod (10.1).

8. Device (1) as per one or more of the Claims 1-5, **characterized in that** at least one transmitter/receiver piezo (16) is provided in the unit (5) capable of oscillation; **in that** the adjusting unit (20) is an integral part of the unit (5) capable of oscillation; and **in that** the resonating frequency of the unit (5) capable of oscillation is in the ultrasonic range.

9. Device (1) as per one or more of the Claims 1-5, **characterized in that** at least one front (15.1) and one rear (15.2) mass is provided in the unit (5) capable of oscillation; **in that** at least one transmitter/ receiver piezo (16) is provided between the two masses (15.1; 15.2); **in that** at least one adjusting unit (20) is an integral part of one of the two masses (15.1; 15.2); and **in that** the resonating frequency of the unit (5) capable of oscillation is in the ultrasonic range.

10. Device (1) as per Claim 8 or 9, **characterized in that** at least one adaptive layer (17) is provided in the unit (5) capable of oscillation for coupling to the medium.

11. Device (1) as per Claim 9, **characterized in that** at least one bolt (18) is provided in the unit (5) capable of oscillation to create pretension.

12. Device (1) as per one of the Claims 1-5, **characterized in that** the unit (5) capable of oscillation comprises at least a measuring tube of a vibration-type measuring sensor inserted in the run of a pipe, particularly a Coriolis mass flow meter or a Coriolis mass flow/density meter.

13. Process to change the resonating frequency of a device (1) to determine and/or monitor at least one physical or chemical process variable of a medium with at least one unit (5) capable of oscillation which generates and/or receives mechanical oscillations, **characterized in that** the rigidity of at least one adjusting unit (20), which is connected to the unit (5) capable of oscillation or is an integral part of the unit (5) capable of oscillation, is changed.

## Revendications

1. Dispositif (1) destiné à la détermination et/ou la surveillance d'au moins une grandeur process physique ou chimique d'un produit, avec au moins une unité apte à vibrer (5), qui génère et/ou reçoit des vibrations mécaniques, **caractérisé en ce qu'**est prévue au moins une unité de réglage (20), dont la rigidité est réglable, et qui est conçue et reliée avec l'unité apte à vibrer (5) ou qui fait partie intégrante de l'unité apte à vibrer (5) de telle manière qu'au moins la fréquence de résonance de l'unité apte à vibrer est réglable par l'intermédiaire de l'unité de réglage (20).

2. Dispositif (1) selon la revendication 1, **caractérisé en ce que** l'unité de réglage (20) se compose d'un matériau piézo-électrique, lequel est relié avec des électrodes (21), et dont la rigidité est modifiable au moins par un courant électrique circulant entre les électrodes (21).

3. Dispositif (1) selon la revendication 1, **caractérisé en ce que** l'unité de réglage (20) se compose d'un matériau magnétoréstrictif, dont la rigidité est modifiable au moins par un champ magnétique appliqué.

4. Dispositif (1) selon la revendication 1, **caractérisé en ce qu'**est prévue une unité de commande (25), qui commande électriquement l'unité de réglage (20).

5. Dispositif (1) selon la revendication 4, **caractérisé en ce que** l'unité de commande (25) est conçue de telle manière à ce qu'elle règle, en fonction de l'amplitude et/ou de la fréquence des vibrations mécaniques générées et/ou reçues par l'unité apte à vibrer (5), la fréquence de résonance de l'unité apte à vibrer (5).

6. Dispositif (1) selon une ou plusieurs des revendications 1 à 5, **caractérisé en ce qu'**est prévue, dans l'unité apte à vibrer (5), au moins une tige vibrante intérieure (10.1) et une tige vibrante extérieure (10.2), **en ce que** la tige vibrante extérieure (10.2) entoure coaxialement la tige vibrante intérieure (10.1), **en ce que** la tige vibrante extérieure (10.2) et la tige vibrante intérieure (10.1) sont couplées l'une à l'autre, et **en ce qu'**au moins une unité de réglage (20) est couplée au moins avec l'une des tiges vibrantes (10.1, 10.2).

7. Dispositif (1) selon la revendication 6, **caractérisé en ce que** l'unité de réglage (20) est reliée au moins avec la tige vibrante intérieure (10.1).

8. Dispositif (1) selon une ou plusieurs des revendications 1 à 5, **caractérisé en ce qu'**est prévue dans l'unité apte à vibrer (5) au moins un élément piézoélectrique émetteur / récepteur (16), **en ce que** l'unité de réglage (20) fait partie intégrante de l'unité apte à vibrer (5), et **en ce que** la fréquence de résonance de l'unité apte à vibrer (5) se situe dans le domaine de l'ultrason.

9. Dispositif (1) selon une ou plusieurs des revendications 1 à 5, **caractérisé en ce que** sont prévues dans l'unité apte à vibrer (5) au moins une masse côté avant (15.1) et une masse côté arrière (15.2), **en ce qu'**au moins un élément piézoélectrique émetteur / récepteur (16) est prévu entre les deux masses (15.1, 15.2), et **en ce que** la fréquence de résonance de l'unité apte à vibrer (5) se situe dans le domaine de l'ultrason.

10. Dispositif (1) selon la revendication 8 ou 9, **caractérisé en ce qu'**est prévue dans l'unité apte à vibrer (5) au moins une couche d'adaptation (17) destinée au couplage au produit.

11. Dispositif (1) selon la revendication 9, **caractérisé en ce qu'**est prévue dans l'unité apte à vibrer (5) au moins un boulon (18), qui génère une précontrainte.

12. Dispositif (1) selon une ou plusieurs des revendications 1 à 5, **caractérisé en ce que** l'unité apte à vibrer (5) comprend au moins un tube de mesure d'un transmetteur de mesure du type à vibrations, inséré dans l'écoulement d'une conduite, notamment un débitmètre Coriolis ou un débitmètre / densimètre Coriolis.

13. Procédé destiné à la modification de la fréquence de résonance d'un dispositif (1) destiné à la détermination et/ou la surveillance d'au moins une grandeur process physique ou chimique d'un produit, avec au moins une unité apte à vibrer (5), qui génère et/ou reçoit des vibrations mécaniques, **caractérisé en ce que** la rigidité d'au moins une unité de réglage (20), laquelle est reliée avec l'unité apte à vibrer (5) ou fait partie intégrante de l'unité apte à vibrer (5), est modifiée.

Fig. 1

# Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10318705
- US 5796011 A
- US 6651513 B
- US 6006609 A
- US 5531126 A